# FASCICULE DE BREVET EUROPEEN

(11) **EP 0 338 382 B1**
(45) Date de publication et mention de la délivrance du brevet: **01.02.1995**
(21) Numéro de dépôt: 89106369.5
(22) Date de dépôt: 11.04.1989
(51) Int. Cl.: H02B 13/02

(54) **Cellule pour poste blindé à moyenne et haute tension et poste constitué de telles cellules**
Zelle für gekapselte Mittel oder Hochspannungsstation und Station, die aus solchen Zellen aufgebaut ist
Cells for enclosed middle and high voltage stations, and station composed of such cells

(30) Priorité: 18.04.1988 FR 8805077
(43) Date de publication de la demande: 25.10.1989
(73) Titulaire: GEC ALSTHOM SA, 75116 Paris (FR)
(72) Inventeur: Thuries, Edmond, F-69330 Meyzieu (FR)
(74) Mandataire: Weinmiller, Jürgen

(56) Documents cités:
- EP-A- 0 197 778
- DE-A- 3 034 021
- DE-A- 3 109 669
- US-A- 4 215 256
- US-A- 4 685 018

## Description

La présente invention concerne un poste de distribution électrique à moyenne ou haute tension, du type blindé, c'est-à-dire dans lequel l'isolement entre eux des principaux composants est assuré par un gaz à bonnes propriétés diélectriques, tel que l'hexafluorure de soufre, sous une pression de quelques bars.

On connaît déjà des postes de ce type, comportant un certain nombre de cellules ayant chacune un départ de distribution et dans chacune desquelles on trouve un disjoncteur encadré par deux sectionneurs.

Un poste selon le préambule de la revendication 1 est par exemple décrit dans la demande de brevet européen n° 0.197.778.

Un but de l'invention est de réaliser un poste de distribution plus économique. Ce but est atteint par la cellule telle que définie dans la partie caractérisante de la revendication 1.

Un sectionneur-disjoncteur (ou interrupteur-sectionneur) est un interrupteur qui, dans sa position d'ouverture, satisfait aux conditions d'isolement spécifiées pour un sectionneur.

Une telle définition est donnée par la Commission Electrotechnique Internationale, dans son "Vocabulaire Electrotechnique International", chapitre 441 "Appareillage et Fusibles", 2ème édition 1984, page 12 n° 441-14-12, Genève, SUISSE.

Dans un tel appareil, tout courant de fuite sur l'isolateur doit s'évacuer à la masse et non entre l'entrée et la sortie.

Un autre but de l'invention est de réaliser un poste tel que décrit dans les revendications 4 et 5 dans lequel il est aisé de démonter la cellule en défaut pour la remplacer ou en remplacer les constituants défectueux.

L'invention sera bien comprise par la description donnée ci-après de divers modes de réalisation de l'invention en référence au dessin annexé dans lequel,
- La figure 1 est un schéma électrique montrant la constitution d'un poste en boucle,
- la figure 2 est un schéma électrique d'un poste avec un jeu de barres commun aux cellules,
- la figure 3 est une vue en élévation partiellement en coupe d'une cellule pour la constitution d'un poste selon l'invention,
- la figure 4 est une vue partielle d'un poste où l'on a représenté trois cellules assemblées,
- les figures 5 à 7 sont des vues de la même portion de poste au cours d'une opération de remplacement d'une cellule défectueuse,
- la figure 8 est un schéma électrique d'un poste à deux jeux de barres selon un premier mode de réalisation,
- la figure 9 est un schéma électrique d'un poste à deux jeux de barres selon un autre mode de réalisation.

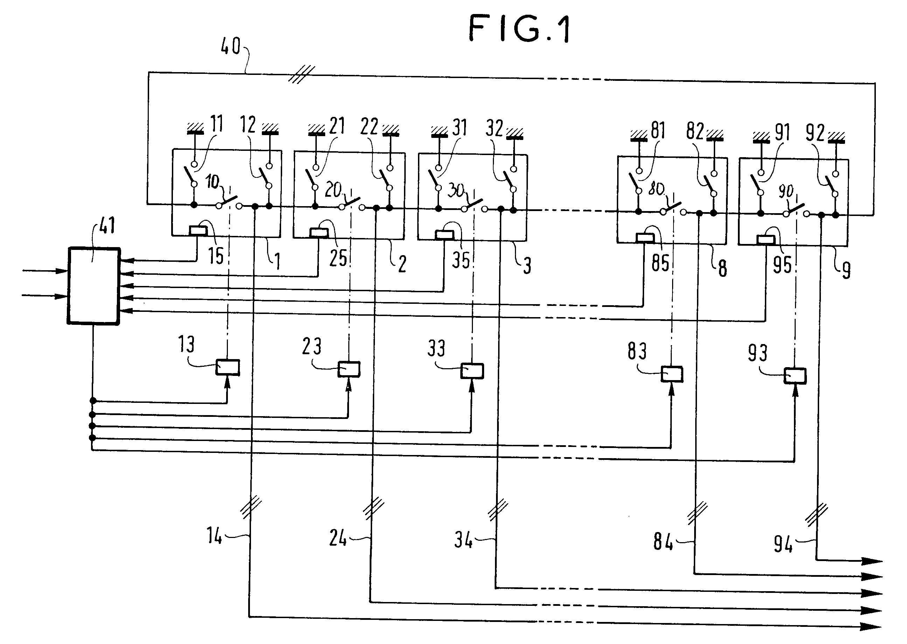

La figure 1 représente schématiquement un poste moyenne ou haute tension, plus particulièrement 72,5 kV, triphasé comprenant une pluralité de cellules blindées 1, 2, 3, 8, 9 connectées électriquement en série et reliées par une boucle 40.

Chaque cellule remplie de gaz diélectrique, tel que l'hexafluorure de soufre sous pression, renferme un sectionneur-disjoncteur 10, 20, 30, ... 80, 90, encadré par deux sectionneurs de mise à la terre 11, 12, 21, 22, 31, 32, 81, 82, 91, 92.

Chaque cellule possède un organe de commande 13, 23, 33, ... 83, 93, commandé par un circuit électronique de commande 41.

De chaque cellule part un câble de distribution, 14, 24, 34, ... 84, 94.

Dans chaque cellule est placée une photo-diode 15, 25, 35, ....85, 95 qui est reliée au circuit électronique de commande.

En cas de défaut dans une cellule (amorçage), un arc est détecté par la diode correspondante qui émet un ordre vers le circuit 41. Le circuit 41 est programmé pour, d'une part, émettre un ordre de commande d'ouverture des cellules encadrant la cellule en défaut et, d'autre part, inhiber les signaux émis par les diodes détectant l'ouverture des sectionneurs-disjoncteurs de ces cellules. Sans cette inhibition, une ouverture successive de tous les sectionneurs-disjoncteurs du poste interviendrait.

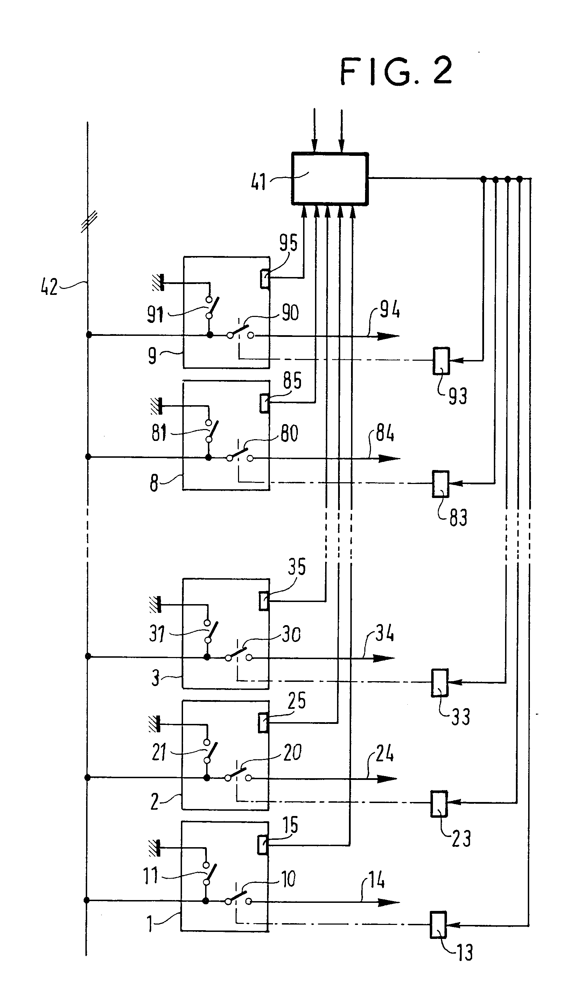

La figure 2 représente une autre réalisation de poste du type à un jeu de barres.

Ce jeu de barres est désigné par la référence 42 dans la figure 2, dans laquelle les éléments communs aux figures 1 et 2 ont reçu les mêmes numéros de référence.

Les départs 14, 24, 34,...84, 94 sont pris en parallèle sur le jeu de barres 42.

Les cellules 1, 2, 3,...8, 9 contiennent un sectionneur-disjoncteur triphasé 10, 20, 30,...80, 90, un seul sectionneur de mise à la lettre 11, 21, 31,...81, 91 en amont du sectionneur-disjoncteur, et une photo-diode 15, 25, 35,...85, 95 reliée à un circuit de commande 41 qui délivre des ordres aux organes 13, 23, 33,...83, 93 des sectionneurs-disjoncteurs.

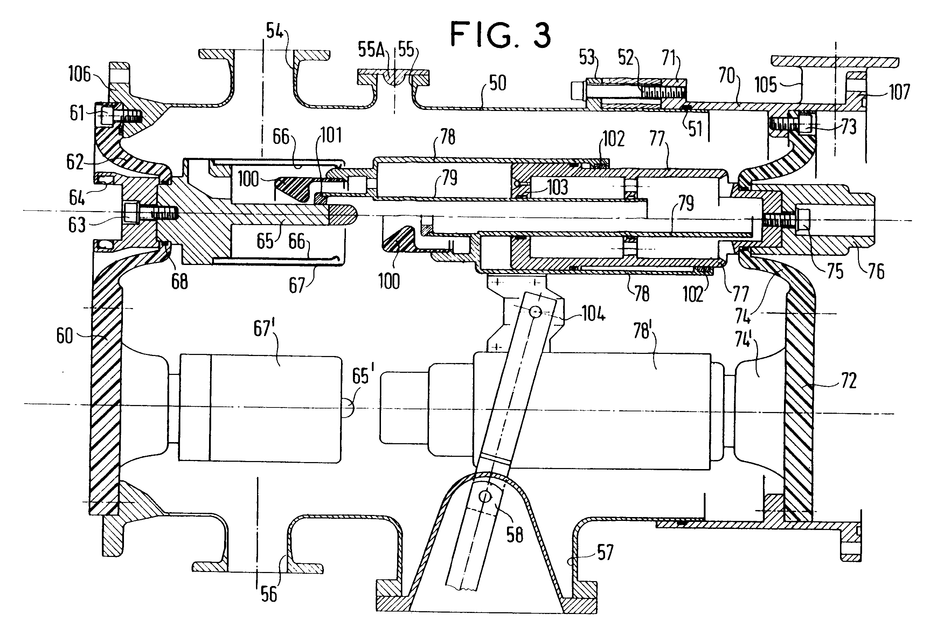

La figure 3 représente, en élévation partiellement coupée, une cellule triphasée comportant les trois pôles d'un sectionneur-disjoncteur. La cellule est bien adaptée à la constitution d'un poste selon un schéma en boucle comme montré dans la figure 1. Les trois pôles du sectionneur sont disposés selon trois lignes parallèles disposées selon un prisme de base équilatérale. Seul un pôle sera décrit en détail.

La cellule comprend un corps métallique venu de moulage, de forme globalement cylindrique, constitué de deux pièces cylindriques 50 et 70, s'emboîtant l'une dans l'autre, avec une étanchéité assurée par un joint 51.

Une vis 52 coopère avec une oreille 53 de la pièce 50 et une oreille 71 de la pièce 70 pour solidariser les deux pièces.

On voit que, selon une caractéristique de l'invention, les deux pièces 50 et 70 peuvent être rapprochées ou éloignées l'une de l'autre par coulissement, ce qui, ainsi qu'il sera expliqué plus loin, facilite le démontage d'une cellule faisant partie d'un groupe de cellules. On note qu'il peut y avoir plusieurs paires d'oreilles 53, 71 pour une même cellule.

La pièce 50 possède, pour chaque pôle, une ouverture 54 pour le passage et la fixation d'un sectionneur de mise à la terre et, en outre, une ouverture 55 pour la mise en place d'une photo-diode 55A, une ouverture 56 pour la sortie du départ de cellule et une ouverture 57 pour le passage d'un mécanisme de manoeuvre 58.

La pièce 50 est fermée par un flasque 60 fixé au moyen de boulons tels que 61.

Le flasque 60 possède trois cratères tel que 62, ouverts, permettant chacun la fixation par vis 63 d'un bloc 64 de contacts femelles, extérieurs à la cellule, à la partie fixe d'un pôle du sectionneur-disjoncteur qui comprend notamment un contact d'arc 65, des doigts de contact permanent 66 et un capot pare-effluves 67. L'étanchéité est assurée par un joint 68.

La pièce 70 est fermée par un flasque 72, fixé au moyen de boulons tels que 73.

Le flasque comporte trois cratères tels que 74 pour la fixation par vis 75 d'un bloc de contact mâle 76, extérieur à la cellule, à un bloc support 77 de l'équipage mobile d'un pôle du sectionneur-disjoncteur.

L'équipage mobile comprend deux tubes coaxiaux solidaires 78 et 79 ; le tube 78 constitue le contact mobile permanent et porte une buse de soufflage 100.

Le tube 79 est terminé par des doigts 101 de contact d'arc.

Le bloc 77 porte des contacts glissants tels que 102 et 103 pour assurer le passage du courant.

Le tube 78 est relié à l'organe de commande 58 par l'intermédiaire d'un bloc 104 commun aux trois pôles.

La pièce 70 porte une ouverture 105 pour le passage et la fixation d'un sectionneur de mise à la terre.

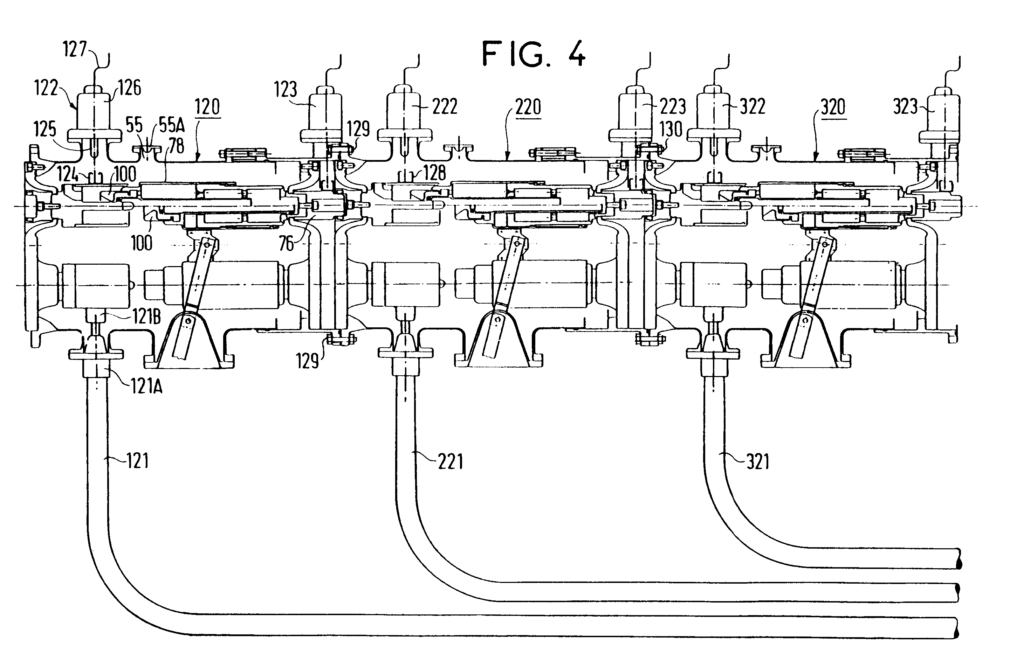

Les pièces 50 et 70 portent des pattes, telles que respectivement 106, 107, pour la fixation entre elles de deux cellules adjacentes, au moyen de boulons tels que 129 et 130 (figure 4).

On aperçoit dans la figure 3 le second pôle de sectionneur-disjoncteur où les éléments visibles ont été référencés avec les mêmes numéros que le pôle décrit en détail, affectés de l'indice "prime".

Le troisième pôle n'est pas visible dans la figure.

La cellule ainsi constituée est bien adaptée à la réalisation d'un poste en boucle, en emboîtant les cellules deux à deux, les contacts 64 et 76 coopérant pour assurer la continuité électrique.

Comme on va le montrer en référence aux figures 4 à 7, il est aisé de remplacer une cellule défectueuse sans interrompre totalement le fonctionnement du poste.

La figure 4 montre trois cellules adjacentes d'un poste en boucle pouvant comprendre beaucoup plus de trois cellules.

On a référencé 120, 220 et 320 ces cellules, et 121, 221 et 321 les départs par câbles de chacune d'elles. Les départs comprennent, pour chaque pôle, une traversée étanche 121A et une prise 121B reliée à l'ensemble fixe du sectionneur-disjoncteur.

On a représenté en 122, 123, 222, 223 et 322, 323 les sectionneurs de mise à la terre qui ne figuraient pas dans la figure 3.

Un sectionneur tel que 122 comprend un contact fixe 124 fixé au capot 100 et un contact mobile 125 associé à un bloc support 126 et muni d'un mécanisme de commande 127 non représenté en détail, mais classique.

Le sectionneur 123 a une constitution identique, le contact fixe 128 étant fixé au bloc de contact mâle 76.

Les références 129 représentent des boulons solidarisant les cellules entre elles. La portion de poste de la figure 4 est représenté en fonctionnement normal ; les sectionneurs de mise à la terre sont ouverts, les sectionneurs-disjoncteurs sont fermés.

On suppose qu'un amorçage a lieu dans la cellule 220 et qu'on veuille procéder à son remplacement.

Celui-ci est détecté par la photo-diode 55A qui commande l'ouverture des sectionneurs-disjoncteurs des cellules 120 et 320 encadrant la cellule en défaut.

Les sectionneurs de mise à la terre 123 et 322 encadrant la cellule en défaut sont fermés. Le départ 121 reste en fonctionnement. Les boulons 130 sont ôtés.

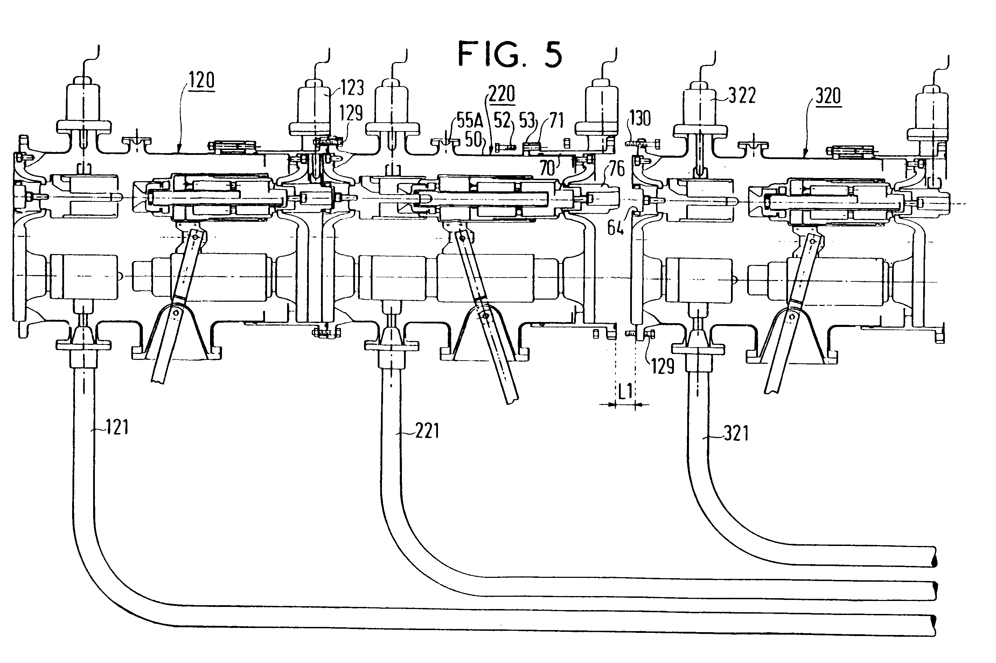

Les boulons 52 sont également ôtés et les parties 50 et 70 de la cellule sont rapprochées (Fig.5), ce qui permet de dégager le contact mâle 76 de la cellule en défaut 220 des contacts femelles 64 de la cellule adjacente 320.

Cette opération permet de dégager entre les cellules 220 et 320 un espace de largeur L1, comme indiqué dans la figure 5.

Les boulons 129 sont ôtés.

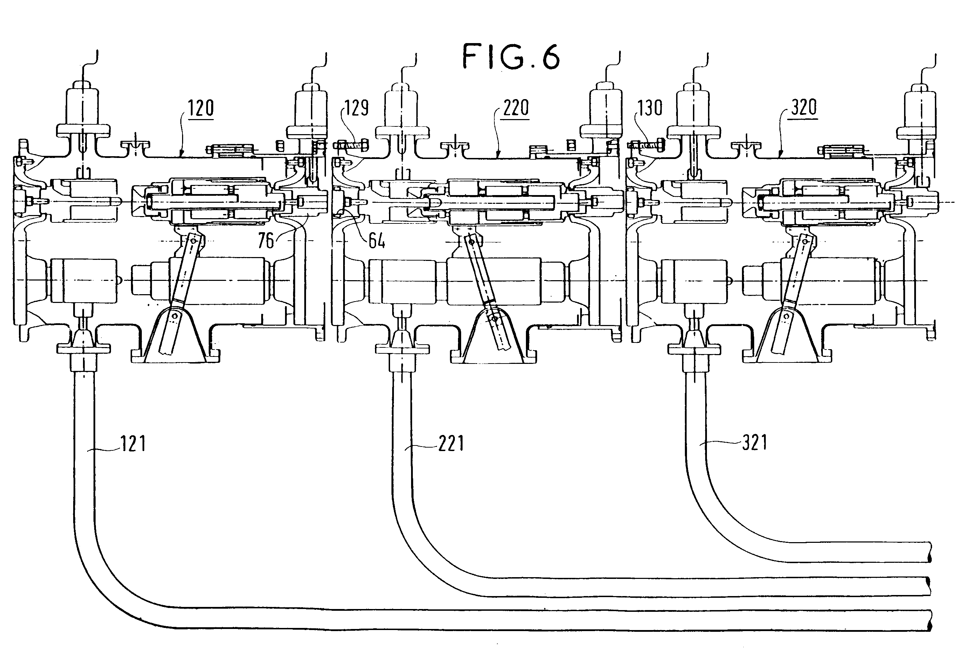

La cellule 220 est déplacée selon son axe de manière à dégager le contact mâle 76 de la cellule 120 du contact femelle 64 de la cellule 220 (fig.6).

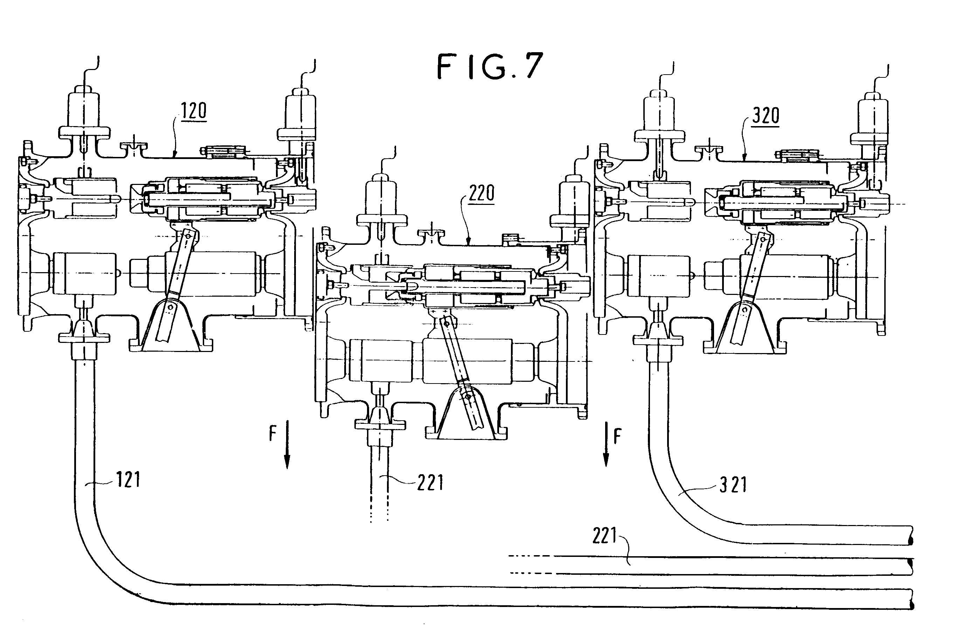

Il suffit alors (fig.7), de déplacer la cellule 220 perpendiculairement à son axe de révolution (selon la flèche F) pour la dégager de l'ensemble et soit la remplacer, soit la remettre en place après réparation en effectuant les opérations en sens inverse.

On notera que toutes les opérations sont possibles sans danger pour le personnel puisqu'aucune partie non à la terre n'est accessible aux opérateurs.

La cellule qui vient d'être d'écrite permet d'atteindre les objectifs proposés:
- faible coût de réalisation,
- accroissement de la sécurité et de la continuité du service,
- maintenance aisée et sans danger pour le personnel.

Les cellules décrites peuvent également être utilisées pour la constitution d'un poste à deux jeux de barres.

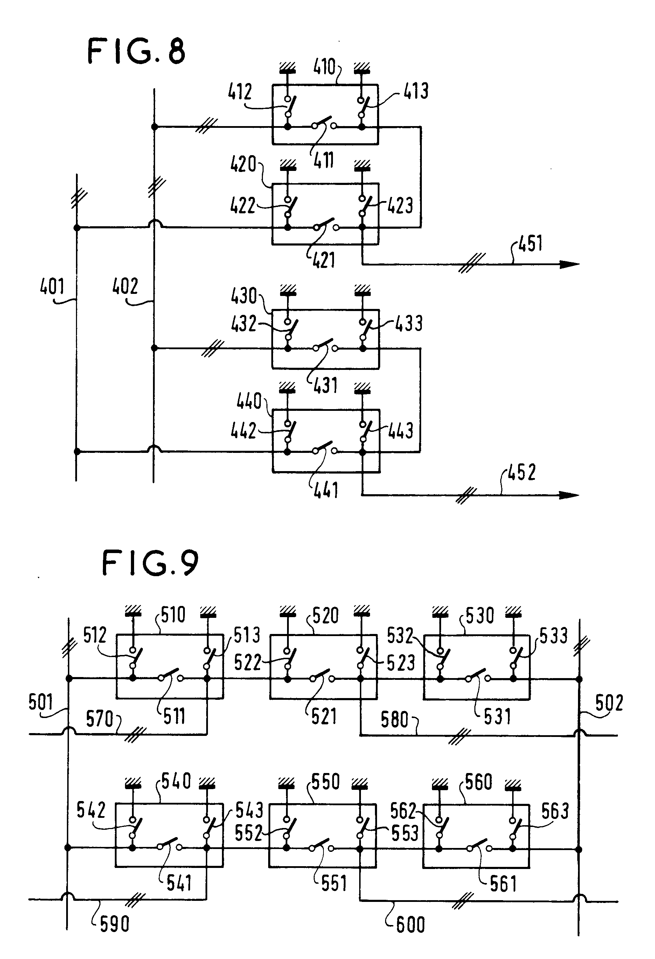

Un tel poste est représenté dans la figure 8 ou l'on distingue deux jeux de barres 401 et 402, alimentant des paires de cellules en série, telles que 410, 420 et 430, 440. Les cellules 410 à 440 comprennent les disjoncteurs 411, 421, 431 et 441, encadrés respectivement par les sectionneurs de mise à la terre 412, 413 ; 422, 423 ; 432, 433 ; 442, 443.

Chaque paire de cellules possède un départ connecté au point commun aux deux cellules.

Les départs sont référencés 451 et 452 dans la figure.

Une variante de poste à deux jeux de barres, dit "à un disjoncteur et demi" est représentée dans la figure 9.

Entre les deux jeux de barres 501 et 502 sont placés des ensembles de trois cellules en série, tels que l'ensemble 510, 520, 530 et l'ensemble 540, 550, 560. Chaque ensemble possède deux départs référencés 570 et 580 pour le premier ensemble et 590, 600 pour le second ensemble et reliés aux points communs à deux cellules voisines.

Chaque cellule possède un disjoncteur 511, 521, 531, 541, 551, 561 encadré par deux sectionneurs de mise à terre, 512, 513, 522, 523, 532, 533, 542, 543, 552, 553, 562 et 563.

## Revendications

1. Cellule triphasée pour poste blindé à moyenne ou haute tension, comprenant une enveloppe remplie de gaz diélectrique sous pression, dans laquelle sont disposés une photodiode (15, 25, ... 95) fournissant un signal en cas d'apparition d'un arc, un sectionneur-disjoncteur triphasé à trois pôles et au moins un sectionneur triphasé de mise à la terre (122, 123) et, pour chaque pôle, un départ par câble (121) traversant l'enveloppe par une traversée étanche (121A), caractérisée en ce que l'enveloppe est composée de deux pièces cylindrique (50, 70) s'emboîtant de manière étanche l'une dans l'autre et permettant d'être solidarisées par des vis (52), de sorte que lorsque les vis sont ôtées, les deux pièces peuvent être rapprochées l'une de l'autre et permettent le démontage d'une cellule faisant partie d'un groupe de cellules en dégageant un espace entre les cellules en vue du remplacement de la cellule.

2. Cellule selon la revendication 1, caractérisée en ce qu'elle comprend deux sectionneurs (122, 123) de mise à la terre encadrant le sectionneur-disjoncteur (100, 78).

3. Cellule selon l'une des revendications 1 et 2, caractérisée en ce que l'enveloppe (50, 70) est fermée par deux flasques en matériau isolant (60, 72), l'un (72) desdits flasques portant trois contacts mâles (76), extérieurs à la cellule et respectivement reliés électriquement, à travers ledit flasque, aux premières bornes des trois pôles du sectionneur-disjoncteur, l'autre flasque (60) portant trois contacts femelles (64) extérieurs à la cellule et respectivement reliés électriquement, à travers ledit flasque, aux autres bornes des trois pôles du sectionneur-disjoncteur.

4. Poste blindé à moyenne ou haute tension du type à deux jeux de barres, caractérisé en ce qu'il comprend, disposée entre les deux jeux de barre, au moins une paire de cellules selon l'une des revendications 1 à 3 (410, 420) disposées en série avec un départ (451) au point commun à deux cellules de la paire.

5. Poste blindé à moyenne ou haute tension du type à deux jeux de barres, caractérisé en ce qu'il comprend, disposé entre les deux jeux de barres, au moins un ensemble de trois cellules selon l'une des revendications 1 à 3, (510, 520, 530) disposées en série, chaque ensemble comprenant deux départs (570, 580) respectivement aux points communs à deux cellules voisines dudit ensemble.

## Patentansprüche

1. Dreiphasenzelle für eine gekapselte Mittel- oder Hochspannungsstation, die eine mit einem unter Druck stehenden dielektrischen Gas gefüllte Hülle aufweist und in welcher eine Fotodiode (15, 25 ... 95), die im Falle eines Lichtbogens ein Signal liefert, ein Dreiphasen-Leistungsschalter mit drei Polen und mindestens ein dreiphasiger Erdungsschalter (122, 123) sowie, für jeden Pol, ein Kabelabgang (121) angeordnet sind, der die Hülle durch eine dichte Durchführung (121A) durchquert, dadurch gekennzeichnet, daß die Hülle aus zwei zylindrischen Bauteilen (50, 70) gebildet ist, die sich dicht ineinanderfügen und durch Schrauben (52) aneinander befestigt werden, derart, daß, wenn die Schrauben entfernt werden, die beiden Bauteile einander angenähert werden können und die Demontage einer zu einer Zellengruppe gehörenden Zelle ermöglicht wird, und zwar durch Freimachen eines Raums zwischen den Zellen im Hinblick auf das Auswechseln der Zelle.

2. Zelle nach Anspruch 1, dadurch gekennzeichnet, daß sie zwei Erdungsschalter (122, 123) aufweist, die den Leistungsschalter (100, 78) zwischen sich einrahmen.

3. Zelle nach Anspruch 1 oder 2, dadurch gekennzeichnet, daß die Hülle (50, 70) durch zwei Flansche (60, 72) aus isolierendem Material verschlossen ist, wobei der eine (72) der Flansche drei vorspringende Kontakte (76) außerhalb der Zelle aufweist, die elektrisch durch den Flansch hindurch an die ersten Klemmen der drei Pole des Leistungsschalters angeschlossen sind, während der andere Flansch (60) drei aufnehmende Kontakte (64) außerhalb der Zelle aufweist, die durch den Flansch elektrisch an die anderen Klemmen der drei Pole des Leistungsschalters angeschlossen sind.

4. Gekapselte Mittel- oder Hochspannungsstation des Typs mit zwei Sammelschienensätzen, dadurch gekennzeichnet, daß sie zwischen den beiden Sammelschienensätzen mindestens ein Paar von Zellen (410, 420) gemäß einem der Ansprüche 1 bis 3 aufweist, die in Reihe angeordnet sind und einen Abgang (451) am Verbindungspunkt der beiden Zellen des Paares aufweisen.

5. Gekapselte Mittel- oder Hochspannungsstation des Typs mit zwei Sammelschienensätzen, dadurch gekennzeichnet, daß sie zwischen den beiden Sammelschienensätzen eine Gruppe von drei Zellen (510, 520, 530) gemäß einem der Ansprüche 1 bis 3 aufweist, die in Reihe geschaltet sind, wobei jede Gruppe zwei Abgänge (570, 580) jeweils an den Verbindungspunkten zweier benachbarter Zellen aufweist.

## Claims

1. A three-phase cell for a medium or high-tension metalclad station, the cell comprising an envelope filled with a dielectric gas under pressure in which there are disposed a photodiode (15, 25, ... 95) providing a signal in the event of an arc appearing; a three-pole three-phase breaker-disconnector; and at least one three-phase grounding disconnector (122, 123); and a cable outlet (121) for each pole passing through the envelope via a respective sealed feedthrough (121A), the cell being characterized in that the envelope is made up of two cylindrical portions (50, 70), which interfit one in the other in sealed manner and which are capable of being fixed together by screws (52), such that when the screws are removed, the two portions can be moved towards each other allowing a cell forming part of a group of cells to be dismantled by clearing space between the cells and with a view to replacing the cell.

2. A cell according to claim 1, characterized in that it includes two grounding disconnectors (122, 123) on either side of the breaker-disconnector (100, 78).

3. A cell according to claim 1 or 2, characterized in that the envelope (50, 70) is closed by two end plates of insulating material (60, 72), one of said end plates (72) having three male contacts (76) outside the cell and electrically connected through said end plate to respective first terminals of the three poles of the breaker-disconnector, the other end plate (60) having three female contacts (64) outside the cell and respectively electrically connected through said end plate to the other terminals of the three poles of the breaker-disconnector.

4. A medium or high tension metalclad station of the type having two sets of bus bars, characterized in that it comprises, disposed between the two sets of bus bars, at least one pair of cells (410, 420) according to any one of claims 1 to 3, and connected in series, with an outlet (451) from the common point between the two cells of the pair.

5. A medium or high tension metalclad station of the type having two sets of bus bars, characterized in that it comprises, disposed between the two sets of bus bars, at least one set of three cells (510, 520, 530) according to any one of claims 1 to 3 connected in series, with each set having two outlets (570, 580) respectively connected to the common points between pairs of adjacent cells in said set.
